# EUROPÄISCHE PATENTSCHRIFT

(11) **EP 1 959 526 B1**
(45) Veröffentlichungstag und Bekanntmachung des Hinweises auf die Patenterteilung: **15.08.2012**
(21) Anmeldenummer: 08002433.4
(22) Anmeldetag: 11.02.2008
(51) Int. Cl.: H01R 43/28, B25J 15/02, B25J 9/04

(54) **Kabelbearbeitungseinrichtung**
Cable processing device
Dispositif de traitement de câble

(30) Priorität: 14.02.2007 DE 102007007244
(43) Veröffentlichungstag der Anmeldung: 20.08.2008
(73) Patentinhaber: Schäfer Werkzeug- und Sondermaschinenbau GmbH, 76669 Bad Schönborn (DE)
(72) Erfinder: Neubauer, Stefan, 67166 Otterstadt (DE)
(74) Vertreter: HOFFMANN EITLE

(56) Entgegenhaltungen:
- US-A1- 2004 068 851
- US-A1- 2004 158 976
- US-A1- 2005 132 770

## Beschreibung

### Technisches Gebiet

Die Erfindung betrifft eine Kabelbearbeitungseinrichtung mit Bearbeitungsstationen zur Konfektionierung eines Kabels, wobei mindestens ein Schwenkarm zur Zuführung des Kabels zu den Bearbeitungsstationen vorgesehen ist und wobei der Schwenkarm mittels eines Schlittens in einer sich parallel zur Längsrichtung des Schwenkarms erstreckenden Führung eines Drehtellers gelagert und durch einen ersten Motor mit dem Drehteller schwenkbar und durch einen in der Führung stationär gelagerten, zweiten Motor parallel zu seiner Längsrichtung hin- und herverschiebbar ist.

### Stand der Technik

Eine solche Kabelbearbeitungseinrichtung ist aus der EP 1447888 A1 bekannt. Der Motor für die Längsverschiebung des Schwenkarms ist dabei in dem Drehteller gelagert und mit einem Zahnrad versehen, dass in eine Zahnstange des Schlittens eingreift und bei einer Relativverdrehung eine Längsverschiebung des den Schwenkarm tragenden Schlittens in der Führung bewirkt. Die Relativerdrehung des Drehtellers mit der Längsführung und dem darin auf einem Schlitten befestigten Schwenkarm wird durch einen ersten Motor und die Längsverschiebung des Schlittens durch einen unabhängigen, zweiten Motor bewirkt.

### Darstellung der Erfindung

Der Erfindung liegt die Aufgabe zu Grunde, eine solche Vorrichtung derart weiter zu entwickeln, dass sich eine Verminderung der Trägheitsmasse der in eine Hin- und Herbewegung einbezogenen Teile ergibt sowie eine Reduzierung der sich bei einer Hin- und Herbewegung des Schlittens ergebenden Schwingungen.

Diese Aufgabe wird erfindungsgemäß bei einer Kabelbearbeitungseinrichtung nach dem Oberbegriff durch die kennzeichnenden Merkmale von Anspruch 1 gelöst. Auf vorteilhafte Weiterbildungen nehmen die Unteransprüche Bezug.

Bei der erfindungsgemäßen Kabelbearbeitungseinrichtung ist dazu vorgesehen, dass durch den zweiten Motor eine Exzenterwelle verdrehbar ist, die einen Exzenter aufweist und dass der Schlitten durch den Exzenter in der Führung hin- und herverschiebar ist. Es wird daher keine mit dem Schenkarm zusammen hin- und herverschiebbare Zahnstange mehr benötigt, was die Größe der bei einer Verschiebung bewegten Trägheitsmassen reduziert.

Bei einer solchen Bauform hat es sich als zweckmäßig erwiesen, dass der Schlitten in der Führung Umkehrpunkte hat, die durch die Lage des oberen und unteren Totpunktes des Exzenters bestimmt sind. Der Schlitten ist dabei auf einem Weg verschiebbar, der mit dem Hub H des Exzenters übereinstimmt. Durch das Zusammenlegen des oberen und unteren Totpunktes des Exzenters mit dem Umkehrpunkten des Schlittens ergeben sich aufeinanderfolgend positive und negative Sinusbeschleunigungen des Schlittens zwischen den beiderseitigen Umkehrpunkten mit dem Vorteil eines sanften Anlaufs und einer sanften Abbremsung an Totpunkten, ohne dass es dazu separater Schwingungsdämpfer oder einer aufwändigen Motorsteuerung bedarf. Die gesamte Mechanik und Elektrik wird dadurch erheblich entlastet, mit dem Vorteil einer besseren Dauerhaltbarkeit. Außerdem können die Motorkräfte über eine längere Wegstrecke zur Beschleunigung und Abbremsung genutzt werden als bisher. Dadurch gelingt es, die Größe des Motors in Hinblick auf die Beibehaltung der bisherigen Taktzeiten der Hin- und Herbewegung des Schwenkarms zu reduzieren oder mit gleichgroßen Motoren schnellere Hin- und Herbewegungen zu erzielen als bisher.

Der Exzenter kann unmittelbar in eine sich quer zur Längsrichtung des Schwenkarms erstreckende Querführung des Schlittens querbeweglich eingreifen, um den Schwenkarm mit dem Schlitten zu verschieben. Eine solche Konstruktion ist besonders einfach herstellbar und montierbar.

Dabei ist es nach einer vorteilhaften Ausgestaltung ist es vorgesehen, dass der Exzenter in einem in der Querführung des Schlittens querverschiebbaren Kulissenstein drehbar aufgenommen ist. Die von dem Exenter auf die Querführung übertragenen Kräfte weren dadurch reduziert. Der Verschleiß lässt sich dementsprechend ebenfalls reduzieren, was im langfristigen Dauereinsatz von Vorteil ist.

Der Exzenter und der Schwenkarm können auch durch eine Pleuelstange verbunden sein, um die Mechanik weiter zu vereinfachen. Die Pleuelstange kann dabei durch ein Gummimetallelement schwenkbar mit dem Schlitten verbunden sein, beispielweise durch einen zylindrischen, biegbaren Gummikörper, der sich paralel zur Längsrichtung der Pleuelstange erstreckt und mit den Stirnflächen an Metallplatten anvulkanisiert und durch die Metallplatten einerseits mit dem Schlitten und andererseits der Pleuelstange verbindbar sind, beispielweise duch eine Verschraubung. Eine solche Verbindung ist frei von gleitenden Gelenkelementen, schwingungsdämpfend und von besonders geringem Gewicht.

Um unkontrollierte Relativbewegungen zu unterbinden, kann es zweckmäßig sein, die Pleuelstange gelenkig zumindest mit dem Exzenter zu verbinden, zweckmäßig durch spielfreie Gelenke.

Die Pleuelstange sollte sich im oberen und unteren Totpunkt des Exzenters zweckmäßig im wesentlichen parallel zur Längsrichtung des Schwenkarms erstrecken, um die Anlauf- und Bremskräfte am Beginn und Ende der Hubbewegung zu vermindern.

Sie kann auch an einem in der Führung schwenkbar gelagerten Kniehebel angreifen, der die eigentliche Hin- und Herverscheibung des Schlttens mit dem Schwenkarm bewirkt, und bei einer solchen Bauform in einer abweichenden Richtung weiter- und gegebenenfalls aus dem unmittelaberen Bereich des Drehteilers herausgeführt sein, beispielsweise zentral durch dessen Achse hindurch senkrecht nach unten. Die Pleuelstange und der zugehörige Motor sind bei einer solchen Bauform nur anteilig bzw. überhaupt nicht in die Schwenk- und Hin- und Herbwegung des Schwenkarms einbezogen. Beide Bewegungen können demgemäß wesentlich schneller als bisher durchgeführt werden, ohne dass es zu störenden Schwingungen kommt.

### Kurzbeschreibung der Zeichnung

Eine beispielhafte Ausführung der Erfindung ist in der beiliegenden Zeichnung dargestellt. Sie wird nachfolgend näher erläutert.

Es zeigen:
Fig. 1 eine Kabeibearbeitungseinrichtung in einer Ansicht von der Seite.
Fig. 2 die Kabelbearbeitungseinrichtung nach Fig. 1 in einer Ansicht von oben.
Fig. 3 einen Antrieb des Schlittens, bei dem ein Exzenter in einem in der Querführung des Schlittens querverschiebbaren Kulissenstein aufgenommen ist.
Fig. 4 einen Antrieb, bei dem der Exzenter und der Schwenkarm durch eine Pleuelstange verbunden sind.
Fig. 5 einen Antrieb ähnlich Fig. 4, bei dem der Schlitten durch einen Kniehebel verschiebbar ist, der durch eine Pleuelstange schwenkbar ist.

### Ausführung der Erfindung

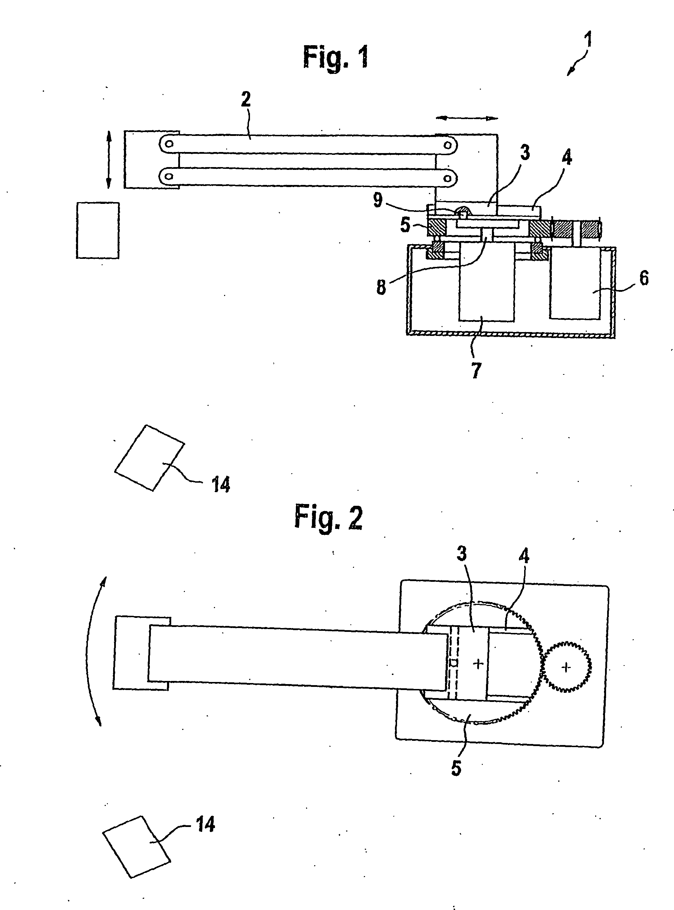

Die in Fig. 1 wiedergegebene Kabelbearbeitungseinrichtung dient zur aufeinanderfolgenden Zuführung eines Kabels zu verschiedenen Bearbeitungsstationen 1 (Fig. 2), die der Konfektionierung dienen, beispielsweise zur Bestückung des Kabels mit Crimpkontakten o.ä. Dabei dient ein Schwenkarm 2 zur Zuführung des Kabels zu den im Halbkreis um dessen Drehachse verteilten Bearbeitungsstationen 1, der mittels eines Schlittens 3 in einer sich parallel zur Längsrichtung des Schwenkarms 2 erstreckenden Führung 4 eines Drehtellers 5 gelagert und durch einen ersten Motor 6 mit dem Drehteller 5 schwenkbar und durch einen in der Führung 4 stationär gelagerten, zweiten Motor 7 parallel zu seiner Längsrichtung hin- und herverschiebbar ist. Nach Erreichend der jeweiligen Schwenkposition ist dabei ein Vorschieben des Schwenkarms vorgesehen, um das zu verarbeitende Kabel in das jeweilige Werkzeug einzuführen und zu bearbeiten und anschleißend ein Zurückziehen, um das Kabel aus dem Werkzeug zu entfernen und die folgende Schwenkbwegung zur nächsten Bearbeitungsstation 1 durchführen zu können.

Die Hin- und Herverschiebung des Schwenkarms wird durch den zweiten Motor 7 bewirkt. Durch diesen ist eine Exzenterwelle 8 verdrehbar, die einen Exzenter 9 aufweist, wobei der den Schwenkarm tragende Schlitten 3 durch den Exzenter 9 in einer Führung 4 auf einem durch zwei Endpunkte beabstandeten Weg der Länge H hin- und herverschiebbar ist.

Der Schlitten 3 hat in der Führung 4 Umkehrpunkte, die zugleich durch den oberen und unteren Totpunkt des Exzenters 9 bestimmt sind. Am Beginn und Ende der Hin- und Herbewegung ergeben sich dadurch nur sehr geringe Beschleunigungskräfte, was es erlaubt, die Hin- und Herbewegung weitgehend schwingungsfrei zu gestalten, ohne dass es besonderer Schwingungsdämpfer oder Anlaufstrombegrenzer eines elektrischen Antriebs bedarf. In technischer und wirtschaftlicher Hinsicht ist das von großem Vorteil.

Der Exzenter 9 greift in eine sich quer zur Längsrichtung des Schwenkarms 2 erstreckende Querführung 10 des Schlittens 3 querbeweglich eingreift.

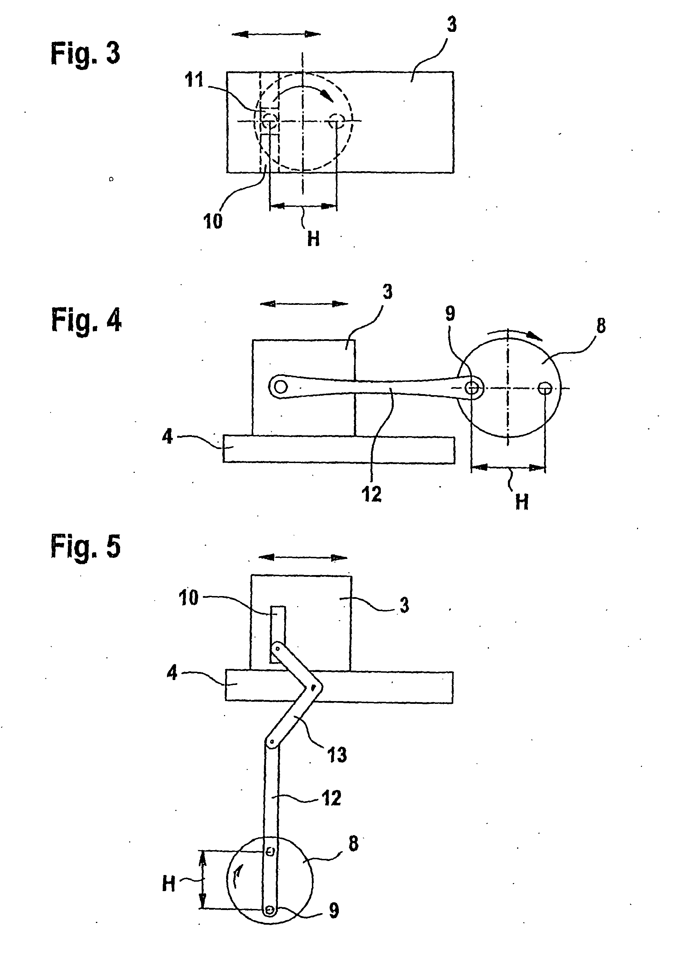

Der Exzenter 9 ist bei der Bauform nach Fig. 3 in einem in der Querführung 10 des Schlittens 3 querverschiebbaren Kulissenstein 11 aufgenommen. Der betriebsbedingte Verschleiß wird dadurch deutlich reduziert.

Bei der Bauform nach Fig. 4 sind der Exzenter 9 und der Schwenkarm 2 durch eine Pleuelstange 12 miteinander verbunden. In schwingungstechnischer Hinsicht und hinsichtlich der Beschleunigungskräfte am Beginn und Ende der Verschiebung des Schlittens ergeben sich dadurch identische Bedingungen, bezogen auf die Bauform nach Fig. 3. Die Montage ist jedoch vereinfacht, insbesondere, wenn die Pleuelstange 12 gelenkig mit dem Schlitten 3 und dem Exzenter 9 verbunden ist, beispielsweise durch spielfreie Lager.

Die Pleuelstange 12 erstreckt sich zweckmäßig im oberen und unteren Totpunkt des Exzenters 9 im wesentlichen parallel zur Längsrichtung des Schwenkarms 2, um die positiven und negativen Beschleunigungen am Beginn und Ende der Hin- und Herbewegung zu vermindern.

Fig. 5 zeigt eine Bauform ähnlich Fig. 4, bei der durch die Pleuelstange 12 ein Kniehebel 13 schwenkbar ist, der in der Führung 4 gelagert und durch ein Gelenk so mit dem Schlitten 3 verbunden ist, dass der Schlitten 3 bei einer Schwenkung des Kniehebels 13 in einen Hin- und Herbewegung versetzt wird. Die Bauform hat den Vorteil, dass die Pleuelstange nicht parallel zur Längsrichtung des Schwenkarms angeordnet sein muss. Sie kann beispielsweise so, wie dargestellt, von unten zentral durch den Drehtisch 5 hindurch und zu dem einen Ende des Kniehebels zugeführt werden, dessen anderes Ende in den Schlitten eingreift. Auch der 2. Motor ist bei dieser Bauform von dem Schlitten getrennt angebracht, beispielsweise unter dem Drehtisch 5, was die Zugänglichkeit des Schwenkarms 2 verbessert und die bei einer Hin- und Herbewegung zu beschleunigenden Trägheitsmassen verringert.

## Patentansprüche

1. Kabelbearbeitungseinrichtung mit Bearbeitungsstationen (1) zur Konfektionierung eines Kabels, wobei mindestens ein Schwenkarm (2) zur Zuführung des Kabels zu den Bearbeitungsstationen (1) vorgesehen ist und wobei der Schwenkarm (2) mittels eines Schlittens (3) in einer sich parallel zur Längsrichtung des Schwenkarms (2) erstreckenden Führung (4) eines Drehtellers (5) gelagert und durch einen ersten Motor (6) mit dem Drehteller (5) schwenkbar und durch einen in der Führung (4) stationär gelagerten, zweiten Motor (7) parallel zu seiner Längsrichtung hin- und herverschiebbar ist, **dadurch gekennzeichnet, dass** durch den zweiten Motor (7) eine Exzenterwelle (8) verdrehbar ist, die einen Exzenter (9) aufweist und dass der Schlitten (3) durch den Exzenter (9) in der Führung (4) hin- und herverschiebbar ist.

2. Kabelbearbeitungseinrichtung nach Anspruch 1, **dadurch gekennzeichnet, dass** der Schlitten (3) in der Führung (4) Umkehrpunkte hat, die durch den oberen und unteren Totpunkt des Exzenters (9) bestimmt sind.

3. Kabelbearbeitungseinrichtung nach Anspruch 1 oder 2, **dadurch gekennzeichnet, dass** der Exzenter (9) in eine sich quer zur Längsrichtung des Schwenkarms (2) erstreckende Querführung (10) des Schlittens (3) querbeweglich eingreift.

4. Kabelbearbeitungseinrichtung nach Anspruch 3, **dadurch gekennzeichnet, dass** der Exzenter (9) in einem in der Querführung (10) des Schlittens (3) querverschiebbaren Kulissenstein 11 aufgenommen ist.

5. Kabeibearbeitungseinrichtung nach Anspruch 1 oder 2, **dadurch gekennzeichnet, dass** der Exzenter (9) und der Schwenkarm (2) durch eine Pleuelstange (12) verbunden sind.

6. Kabelbearbeitungseinrichtung nach Anspruch 5, **dadurch gekennzeichnet, dass** die Pleuelstange (12) gelenkig mit dem Schlitten (3) und dem Exzenter (9) verbunden ist.

7. Kabelbearbeitungseinrichtung nach Anspruch 6, **dadurch gekennzeichnet, dass** sich die Pleuelstange (12) im oberen und unteren Totpunkt des Exzenters (9) im wesentlichen parallel zur Längsrichtung des Schwenkarms (2) erstreckt.

## Claims

1. Cable processing device having processing stations (1) for the manufacture of a cable, wherein at least one pivot arm (2) is provided for delivery of the cable to the processing stations (1) and wherein the pivot arm (2) is mounted by means of a carriage (3) in a guide (4) of a turntable (5) that extends parallel to the longitudinal direction of the pivot arm (2) and can be pivoted with the turntable (5) by a first motor (6) and reciprocated parallel to its longitudinal direction by a second motor (7) mounted stationarily in the guide (4), **characterised in that** an eccentric shaft (8) which has an eccentric (9) is rotatable by the second motor (7) and **in that** the carriage (3) can be reciprocated by the eccentric (9) in the guide (4).

2. Cable processing device according to claim 1, **characterised in that** the carriage (3) in the guide (4) has reversing points which are defined by the top and bottom dead centres of the eccentric (9).

3. Cable processing device according to claim 1 or 2, **characterised in that** the eccentric (9) engages transversely movably in a transverse guide (10) of the carriage (3) extending transversely to the longitudinal direction of the pivot arm (2).

4. Cable processing device according to claim 3, **characterised in that** the eccentric (9) is held in a slide block (11) which is transversely slidable in a transverse guide (10) of the carriage (3).

5. Cable processing device according to claim 1 or 2, **characterised in that** the eccentric (9) and the pivot arm (2) are connected by a connecting rod (12).

6. Cable processing device according to claim 5, **characterised in that** the connecting rod (12) is hinged to the carriage (3) and the eccentric (9).

7. Cable processing device according to claim 6, **characterised in that** the connecting rod (12) extends substantially parallel to the longitudinal direction of the pivot arm (2) at the top and bottom dead centres of the eccentric (9).

## Revendications

1. Dispositif de traitement d'un câble comportant des stations de traitement (1) pour la fabrication d'un câble, où au moins un bras pivotant (2) est prévu pour l'amenée du câble aux stations de traitement (1), et où le bras pivotant (2) est monté au moyen d'un chariot (3) dans un guidage (4) d'un plateau tournant (5) qui s'étend parallèlement à la direction longitudinale du bras pivotant (2), et est pivotant avec le plateau tournant (5) grâce à un premier moteur (6), et est déplaçable en va-et-vient parallèlement à sa direction longitudinale grâce à un deuxième moteur (7) fixement monté dans le guidage (4), **caractérisé en ce qu'**un arbre excentrique (8) qui comporte un excentrique (9) est entraîné en rotation par un deuxième moteur (7), et **en ce que** le chariot (3) est déplaçable en va-et-vient dans le guidage (4) au moyen de l'excentrique (9).

2. Dispositif de traitement d'un câble selon la revendication 1, **caractérisé en ce que** le chariot (3) présente des points d'inversion dans le guidage (4), lesquels sont définis par le point mort supérieur et le point mort inférieur de l'excentrique (9).

3. Dispositif de traitement d'un câble selon la revendication 1 ou 2, **caractérisé en ce que** l'excentrique (9) s'engage avec mobilité transversale dans un guidage transversal (10) du chariot (3), lequel s'étend transversalement à la direction longitudinale du bras pivotant (2).

4. Dispositif de traitement d'un câble selon la revendication 3, **caractérisé en ce que** l'excentrique (9) est logé dans un coulisseau (11) déplaçable transversalement dans le guidage transversal (10) du chariot (3).

5. Dispositif de traitement d'un câble selon la revendication 1 ou 2, **caractérisé en ce que** l'excentrique (9) et le bras pivotant (2) sont raccordés par une bielle (12).

6. Dispositif de traitement d'un câble selon la revendication 5, **caractérisé en ce que** la bielle (12) est raccordée de manière articulée au chariot (3) et à l'excentrique (9).

7. Dispositif de traitement d'un câble selon la revendication 6, **caractérisé en ce que** la bielle (12) s'étend sur le point mort supérieur et le point mort inférieur de l'excentrique (9) sensiblement parallèlement à la direction longitudinale du bras pivotant (2).
